Europäisches Patentamt

(19)　European Patent Office

Office européen des brevets

(11)　EP 0 795 587 A1

## (12)　EUROPEAN PATENT APPLICATION
published in accordance with Art. 158(3) EPC

(43) Date of publication:
17.09.1997 Bulletin 1997/38

(21) Application number: 95938472.8

(22) Date of filing: 07.12.1995

(51) Int. Cl.$^6$: **C09C 3/04**, C09C 1/62, C08K 3/08, C08J 3/22

(86) International application number:
PCT/ES95/00147

(87) International publication number:
WO 97/02324 (23.01.1997 Gazette 1997/05)

(84) Designated Contracting States:
AT BE DE ES FR GB IT PT

(30) Priority: 04.07.1995 ES 9501335

(71) Applicant:
Variantus, Serviços E Investimentos, Lda.
9000 Funchal (PT)

(72) Inventor: **CAMACHO JUAREZ, Francisco**
E-Aravaca (ES)

(74) Representative: **Ungria Lopez, Javier et al**
Avda. Ramon y Cajal, 78
28043 Madrid (ES)

(54)　**METHOD FOR THE CHROMATIC STABILIZATION OF PIGMENTS FOR POLYMERS, PROCESS FOR THE COLORATION OF POLYMERS, AND PIGMENTS OBTAINED BY SUCH METHOD**

(57)　The process is carried out by using pigments which contain conventional metal elements treated by a chromatic stabilization method, in screenings of at least one polymer to be coloured, prior to the introduction of the polymer mass into an extrusion pre-chamber. The stabilization method consists in modifying the distribution of electrons in the external orbitals of the pigments so as to present an affinity to electron distribution characteristics in the external orbitals of the polymer to be coloured, through photonic discharges of ultrashort wave length light onto the pigments in order to displace electrons from the internal orbitals to the external orbitals of the metal elements in the pigments, in a number inversely proportional to the value of the molecular weight to be obtained. The energy applied to the photonic discharges is determined as a function of the difference of the power potentials between said orbitals. To this effect, the wave length (X) of the ultrashort wave length light applied, is adjusted by dividing the light velocity (C) by the Planck constant ($K_P$), and subtracting from the result a power potential higher than the power potential of said internal orbitals. The discharges are applied during a time duration which provide for the exposure of pigments during 0.1 second per 10 microns of thickness of the pigments to be treated.

EP 0 795 587 A1

## Description

The invention refers to a process for the coloration of polymers, a method for the chromatic stabilization of conventional pigments, that contain metal elements, as well as chromatically stabilized pigments for the coloration of polymers.

## TECHNICAL FIELD OF THE INVENTION

Over the last decades, different conventional materials such as metals, wood, ceramics and stone, have been progressively replaced by plastic materials made of polymers such as PVC, P.E., P.E.T and P.M.M. For example, furniture, closures, sections, building material such as doors, window frames, panels for carpentry, pipes, screens, as well as sheaths for electric cables, frames for all types of apparatus, containers and packaging material, hoses, sleeves, household wares, mechanical components and many more, may be cited as examples.

In general, such polymers are distinguished due to their low cost, their resistance to agents that harm the environment, their easy formability, their low specific weight, their impermeability, etc.

The inconvenience of polymers colored by conventional methods has traditionally been the difficulty that their coloration had due to the fact above all upon the manufactured goods being exposed to environmental factors, such as sun light and to the aging of said articles, a migration of the pigments was produced. Although the pigment apparently remained integrated in the polymer mass, in fact it remained isolated due to the formation of a molecular interface that prevented it from mixing homogeneously in the polymer mass. This led to the formation of overlying layers and, in short, an irregular decoloration by areas of the resulting polymer goods, at the least, a very deteriorated appearance.

On the other hand, the more macromolecular the structure of the different polymers and the greater the resistance to the heat induced deformation and the greater the required mechanical resistance were, the greater the problems implied in the coloration were. Thus, for example, in the case of PVC, aside from the above mentioned problems of coloration they resulted in that basically it is only available with some sufficient qualities in the color white. The adding of pigments involved the inconvenience that it also caused an excessive modification of the linear expansion coefficient of the goods, embrittlement, premature aging, as well as an excessive drop of the softening point.

The efforts to solve these inconveniences basically consisted of increasing the homogeneity of the dispersion of the pigments in the polymer mass by means of adding additives, such as dispersing agents and/or by increasing the temperature in the extrusion nozzles upon forming the article. However, these efforts have not produced satisfactory results since, on the one hand, the dispersion continued to be insufficient so as to guarantee a permanent coloration and, on the other hand, for example, for articles made out of PVC, the pigment began to migrate its outside surface. As the chloride of the PVC of the surface of the article began to oxidize, an irregular and progressive degradation of the color was produced as well as an excessive roughness of the surface of the article.

In the present-day conventional pigments, that are used in the coloration of polymer materials, the different colors are basically obtained in accordance with the chemical element that has been used in the manufacture thereof. Hence, for example, chrome or cadmium in yellow pigments, cobalt in blue pigments, copper in green pigments, iron in red pigments, etc., can be cited. A common characteristic of the large majority of these pigments is that they have a relatively low molecular weight, thus their addition to materials with a similar molecular weight, tends to produce a satisfactory coloration. However, when the material to be colored had a very high molecular weight, it was not possible to attain a homogenous dispersion of the pigment in the material, causing the formation of the interfaces and the above specified subsequent adverse effects. The commercially obtainable pigments comprise a metal element, for example, barium, cadmium, cobalt, copper, chrome, iron etc., vehicled in a polymer carrier of for example P.E.T., P.P. or P.E., as well as antioxidants, stabilizers and lubricants. All of the components together tend to be called a masterbatch. Masterbatches typically used in the coloration of polymers are called FERROCOLOR of Ferro Emanel and CROMOFIX of Industrias Quimicas Auxiliares Del Plástico, S.A.

The typical composition of masterbatches of the above mentioned type are (in % by weight) 44-49% of a metal element, 34-40% of a polymer, 4-7% of an antioxidant, as well as stabilizers and lubricants. The masterbatches tend to be included in an amount from 3 to 10% by weight in the screenings of the polymer to be colored. The basic polymer screenings, aside from the masterbatch, tend to comprise up to about 50% by weight of a polymer as well as antioxidants, lubricants, stabilizers, etc. Such screenings are marketed for example by Bayer Comercial Hispana, S.A. and Comercial Hispana De Plásticos, S.A.

## OBJECT OF THE INVENTION

The object of the present invention is to solve the above cited inconveniences in the coloration of polymers according to the prior art, by means of chromatically stabilized pigments that are distributed homogeneously in the polymers to be colored.

## DESCRIPTION OF THE INVENTION

The object of the invention is essentially achieved by prior treatment of pigments that contain conventional metal elements, in accordance with a method according to which a conventional pigment is subjected to photonic discharges of ultrashort wavelength light determining the energy applicable to the photonic discharges as a function of the difference of the power potentials between the internal and external orbitals of the metal elements present in the pigment, adjusting the wave length (X) of the ultrashort wavelength light applied, to a constant value resulting from dividing the light velocity (C) by the Planck constant ($K_P$), and subtracting from the result a power potential higher than the power potential of said internal orbitals. The discharges are applied for a time duration which allows for exposure of the pigments of 0.1 second per 10 microns of thickness of the pigments to be treated.

In this way a modification of the distribution of electrons in the external orbitals of the metal elements resulting in a greater affinity that allows the pigments to be able to interact with the macromolecules of the polymer to be colored, is achieved.

By means of photonic discharges of ultrashort wave length light on the pigments, the electrons are displaced from the internal orbitals to the external orbitals of the metal elements in the pigments, in a number inversely proportional to the value of the molecular weight that is to be obtained. This displacement can be achieved for example by the use of Westinghouse 50-N and 65 BL.K., Philips RS 750 and RS-45K and Osram PTL-6OL radiators of black light tubes, in other words by means of a conventional transformation for other uses of "black" light that tends to have a wave length around $1.7 \times 10^{-9}$ cm (160 to 190 nm) between the square peaks, generated and driven out of the radiator.

For this purpose, the time and necessary energy for the exposure of the pigment to the black light is calculated as of the molecular weight (n) of a known pigment, of the known molecular weight of the polymer (N), of the known atomic structure as to the number of electrons and valance of the metal element contained in the pigment.

Hence, the number of electrons (N) that are transferred from the internal orbitals (e) to the external orbitals (E), according to the formula

$$N = (e\text{-}E) \, \frac{1}{N \text{ - } n}$$

The energy that must be applied to allow this transfer is calculated from the following formula

$$W_e \text{ (erg(sec.))} = N + K_P$$

In this way, the treated metal element has, in its external and internal orbitals, a modified distribution of its electrons, in such a way that the external orbitals (E) have additional electrons coming from displacement from the internal orbitals (e), in a number inversely proportional to the value of the molecular weight of the polymer.

With the pigments thus modified, a homogeneous distribution of the pigments in the polymer mass is made possible resulting in a lasting chromatic stabilization, without a loss of the mechanical qualities or of the resistance to environmental agents, of the polymer article colored with pigments in this way.

The light to which the pigments are exposed, has a wave length between 160 and 190 nanometers, commonly called "black" light. Preferably, it is emitted in pulses and it is modulated to produce square waves so that the light can penetrate through the orbitals of the metal elements and through the layers formed by the pigments.

Exposure to black light of the pigments to be treated, is from 0.08 and 0.12 second and preferably from 0.1 second per 10 microns of thickness of the pigments to be treated.

The distance (D), that allows variations of more/less 20 % between the source of black light and the surface of the pigment layer, is calculated according to the equation

$$D = L \times k$$

wherein L is equal to the wave length of the light and k is a constant equal to $(2 \times 45) \times 10^6$ m. The constant k is determined in function of the harmonics of the wave length multiplied by $10^{-6}$, in other words by the resonance or amplification factor of the wave length.

The emitting power of the source of black light (in W) is calculated in function of the capacity to raise the temperature, according to the black panel standard in degrees Celsius, starting from a working temperature range in the treatment of pigments between 20 and 33°C, preferably between 25 and 28°C. The black panel is a known international standard of measurement to control temperatures of a panel of 250 x 100 x 1 mm in accordance with the ASTM gray scale upon which the source of energy that is to be verified is projected.

Conveniently, exposure of the pigments to black light is done in a tunnel through which a conveyor belt on which a layer of pigments with a thickness of 2 - 3 cm passes, calculating the transport velocity (V) in terms of the formula

$$V = e \times 0.10 \text{ m/sec}$$

wherein e is equal to a multiple of 0.10 m. Velocities 20 % faster or slower are also tolerable.

The factor e is determined in function to which a flowing-through velocity of the pigment that allows sufficient "photosensibilization" of all the exposed pigment is to be found. To this respect, it should be taken into account that, basically, excessive exposure is not detrimental but too short exposure can result in insufficient modification of the external orbitals of the pigment.

Thus for example, exposure of the pigment to black light may be done, starting with a thickness of the pigment layer of 0.025 m and a width of 0.31 m and a length of the source of black light of 0.65 m, in which case each longitudinal strip of 0.001 m of pigment must be exposed to black light for 1 second.

A suitable installation for treating the pigment is for example a tunnel protected in such a way that essentially no light is emitted nor does its inside endure any emissions of environmental light, consisting of a rectangular body of 5500 x 400 x 450 mm through which a conveyor belt passes at a velocity of 300 to 430 m/h, fed with untreated pigment through one of its ends through a measuring hopper capable of depositing a layer of pigment with a thickness of 2 to 3 cm. Besides, the installation comprises six tubes emitting black light of 160 to 190 nm and distributed in equidistant successive pairs longitudinally in the tunnel.

## DESCRIPTION OF PREFERRED EMBODIMENTS OF THE INVENTION

The features of the invention based on some examples are illustrated hereinafter.

**Example 1:** A tunnel of the above mentioned type, with an essentially parallelepiped shape of 5500 x 450 x 400 in whose bottom there is a conventional conveyor belt with a width or 310 mm that moves at a transport velocity of 35 m/minute (= 2.100 m/h), and in whose ceiling there are six conventional Westinghouse 65 BL.K. conventional luminescent tubes 40 cm. long, each one of 40 W of black light that emit light with a wave length of 180 nm, longitudinally in longitudinal and transversally equidistant pairs, is set up. By means of a conventional proportioner placed at the entry of the tunnel, a masterbatch of pigment of the CROMOFIX series of Industrias Quimicas Auxiliares Del Plástico, S.A., is placed continuously on the belt in an adequate amount with an essentially uniform thickness of 25 mm. The already treated pigment is gathered up at the exit of the tunnel in conventional plastic sacks.

In this way, starting from an approximate density of the masterbatch of 700 kg/m$^3$, a yield of 1,000 kg/h of treated pigment is obtained.

**Example 2:** The pigment introduced in the tunnel of example 1 is CROMOFIX pigment Ref. Master 1436 (Series 0) apt for coloration in Gc-04 yellow of PVC screenings. The metal element present in said pigment in approximately 45% by weight is cadmium.

**Example 3:** The pigment introduced in the tunnel of example 1 is CROMOFIX pigment Ref. Master 3003 (Series 0) apt for coloration in Ro-01 red of PVC screenings. The metal element present in said pigment in approximately 48% by weight is iron.

**Example 4:** A rigid section of conventional yellow PVC with a content of approximately 5% by weight of the pigment of example 2 treated according to example 1, with an approximate length of 30 cm and a width of about 8 cm, was prepared.

The sample was subjected to the determination of the linear expansion coefficient according to Standard UNE 53126-79. The resulting coefficient was 7.6 x 10$^{-5}$.

Taking into account that, for such sensitive applications of PVC sections such as their use, for example, as curtain guides, a linear expansion coefficient of 5x10$^{-1}$ suffices. One can see that the coefficient of the yellow sample with the pigment treated in accordance with example 1 has excellent mechanical qualities.

**Example 5:** A rigid section of conventional red PVC with a content of approximately 5& by weight of the pigment of example 4 treated according to example 1, with an approximate length of 30 cm and a width of about 8 cm, was prepared.

The sample was subjected to the determination of the linear expansion coefficient according to Standard UNE 53126-79. The resulting coefficient was 7.3 x 10$^{-5}$.

Taking into account that, for such sensitive applications of PVC sections such as their use, for example, as curtain guides, a linear expansion coefficient of 5x10$^{-1}$ suffices. One can see that the coefficient of the yellow sample with the pigment treated in accordance with example 1 has excellent mechanical quailties.

**Example 6:** The section of example 3 was cut longitudinally and one of the halves was subjected to accelerated aging in an XENOTEST-150 apparatus, for successive periods of 24, 48, 72 and 96 hours, while the other half was kept in absolute darkness at 23°C and 50% relative humidity so that it would act as a standard sample.

After each period, the visual comparison of the exposed samples with the standard sample was carried out. No difference was noticed between the colors until after 72 hours and a hardly appreciable clarification was noticed after 96 hours.

These results confirm the high chromatic stability of the PVC articles that include the pigments of the present invention, even under the extreme conditions of exposure to light simulated by aging in the XENOTEST apparatus.

**EXAMPLE 7:** The section of example 4 was cut longitudinally and one of the halves was subjected to accelerated aging in an XENOTEST-150 apparatus, for successive periods of 24, 48, 72 and 96 hours, while the other half was kept in absolute darkness at 23°C and 50% relative humidity so that it would act as a standard sample.

After each period, the visual comparison of the exposed samples with the standard sample was carried out. No difference between the colors was noticed.

These results also confirm the high chromatic stability of the PVC articles that contain the pigments of the present invention, even under the extreme conditions of exposure to light simulated by aging in the XENOTEST apparatus.

**EXAMPLE 8:** CROMOFIX masterbatch pigments Ref. Master 6004 (Series 0, for Vc-04 green) and Ref. Master 7436 (Series 0, for Mr-10 brown) of Industries Quimicas Auxiliares del Plástico, S.A., were treated in accordance with the specifications of example 1.

The treated pigments were added in a proportion of 5% by weight, respectively in conventional PVC screenings and conventional PVC strips 1 m. long, 3 m. thick and 8 cm. wide were prepared by conventional extrusion.

Additionally, a third strip with the yellow pigment of example 2 was prepared in a similar way.

From each one of the three strips, namely, a green strip, a brown strip and a yellow strip, two 10 cm. long samples were cut crosswise.

From the 6 samples obtained, three strips, one of each color, were subjected to an accelerated aging test in a WeatherOmeter ATLAS C135A chamber, while the other three samples were maintained under conditions of absolute darkness at 23°C and 50% relative humidity in order to constitute standard samples.

The three samples subjected to aging were placed in the anchoring devices of the ATLAS chamber in such a way that they turned around an Xenon arc lamp at a speed of 1 rpm in such a way that only one of the surfaces of the samples were exposed to the radiation of the lamp. The radiation of the Xenon arc lamp, whose spectrum goes from ultraviolet to infrared rays, was filtered to reduce the shorter emissions and to, partially, eliminate, the infrared rays so that the radiation has a distribution as similar as possible to that of sun light.

The ATLAS camera was programmed to reproduce repetitive degradation cycles, the amount of radiation emitted as well as the number of hours of light and darkness that have gone by remaining recorded during said cycles, in accordance with the following specifications:

- cycles of 102 minutes of light and 18 minutes of light with spraying of water;
- temperature of the black panel: 65°C ± 2;
- temperature of the dry bulb: 38°C ± 2;
- relative humidity: 40% ± 5;
- irradiation at 340 nm: 0.47 W/m$^2$;
- total duration of the test: 497 hours.

In order to detect the color changes in the tested samples with respect to the standard samples, a Dr. Lange microcolorimeter, capable of making color measurements in three coordinates, namely green-red (a*), blue-yellow (b*) and black-white (L*), as well as their differences with respect to the reference standard, was used.

The color measurements followed known systematics and first of all consisted of, carrying out a series of standard black and white calibrations of the apparatus. Afterwards, the CIE-LAB system was chosen as the reading program, carrying out color readings of each one of the samples, with respect to each standard. In this way, a series of absolute samples corresponding to the standards was obtained, in coordinates L*, a*, b*, as well as a series of measurements indicating the existing differences (△L*), (△a*), (△b*) between the samples and said standards in said coordinates.

The test results that refer to the color readings, in accordance with the CIE-LAB system are shown on the following table:

Table 1

| Exposure time (h) | Radiation received (KJ/m$^2$) | CIE-LAB color measurements | Yellow | Green | Brown |
|---|---|---|---|---|---|
| 0 | 0 | $\triangle$ L* | 88 | 76.9 | 74.4 |
| | | $\triangle$a* | -0.9 | -29.2 | 9.2 |
| | | $\triangle$b* | 54 | 8.5 | 14.4 |
| 163 | 261.2 | $\triangle$ L* | 3 | 0.1 | -2.0 |
| | | $\triangle$a* | 0.6 | -0.1 | 0.9 |
| | | $\triangle$b* | -23.2 | 0.1 | 1.5 |
| | | $\triangle$E* | **25.5** | **0.8** | **2.4** |
| 354 | 575.3 | $\triangle$ L* | 4.3 | -0.2 | -2.1 |
| | | $\triangle$a* | 0.7 | -1.0 | 0.6 |
| | | $\triangle$b* | -34.2 | 0.2 | 1.2 |
| | | $\triangle$E* | **34.5** | **1.3** | **2.1** |
| 497 | 812.7 | $\triangle$ L* | 5.9 | 0.62 | -1.1 |
| | | $\triangle$a* | 0.7 | -0.4 | -0.3 |
| | | $\triangle$b* | -38.3 | -1.3 | -1.3 |
| | | $\triangle$E* | **38.75** | **3.2** | **1.6** |

The value $\triangle$E* resulting from the L*, a*, b* system, especially expressive to recognize chromatic differences, is calculated in the following manner:

$$\triangle E^* = \sqrt{(\triangle L^*)^2 + (\triangle a^*)^2 + (\triangle b^*)^2}$$

wherein

$$\triangle L^* = L^*_p - L^*_m$$
$$\triangle a^* = a^*_p - a^*_m$$
$$\triangle b^* = b^*_p - b^*_m$$

being p = color standard
m = tested color sample

The values $\triangle$E* of table 1 fully confirm the chromatic stability granted by the pigments of the present invention, in view of the fact that it is considered that there is an excellent chromatic stability when $\triangle$E* < 50.

## Claims

1. Method for the chromatic stabilization of pigments that contain metal elements for polymers, characterized in that a pigment mass is exposed to radiation of a pulsed light of square waves, of a wave length between 160 and 190 nm for a time period and an intensity sufficient to displace electrons of the internal orbitals of the metal elements of the pigments towards the external orbitals of said metal elements.

2. Method according to claim 1, characterized in that the pigment is exposed to light for 0.08 to 0.12 second per 10 micron of thickness of the pigment mass.

3. Method according to claim 2, characterized in that the pigment is exposed for at least 0.1 second per 10 micron of thickness of the pigment mass.

4. Method according to claim 1, characterized in that the pulsed light of square waves has a wave length of 165 to 180 nm.

5. Method according to claim 1, characterized in that it is carried out at room temperature.

6. Process for the coloration with pigments that contain conventional metal elements, characterized in that the pigments, prior to their being added to the polymer mass, are subjected to a chromatic stabilization method consisting of modifying the distribution of electrons in the external orbitals of the pigments in such a way that it has affinity to the characteristics of the distribution of electrons in the external orbitals of the polymer to be colored, by means of photonic discharges of ultrashort wave length light onto the pigments in order to displace electrons from the internal orbitals to the external orbitals of the metal elements in the pigments, in a number inversely proportional to the value of the molecular weight to be obtained, determining the energy applicable to the photonic discharges as a function of the difference of the power potentials between said orbitals, determining the wave length $(X)$ of the ultrashort wave length light that is applied by dividing the light velocity $(C)$ by the Planck constant $(K^P)$, and subtracting from the result a power potential higher than the power potential of said internal orbitals, and applying the discharges a time period that allows exposure of the pigments of 0.08-0.2 second per 10 micron of thickness of the pigments to be treated.

7. Pigment that contains a metal element, for coloration of a polymer characterized in that the metal element has, in its external and internal orbitals, a modified distribution of its electrons, in such a way that the external orbitals $(E)$ have additional electrons coming from displacement from the internal orbitals $(e)$, in a number inversely proportional to the value of the molecular weight of the polymer.

8. Pigment for coloration of polymers, characterized in that it is prepared according to the method of any of claims 1 to 5.

9. Colored pigment, characterized in that it contains a pigment prepared according to the method of any of the claims 1 to 5.

10. Colored pigment, characterized in that it contains the pigment of claim 6.

EP 0 795 587 A1

**INTERNATIONAL SEARCH REPORT**

International application No.

PCT/ES 95/00147

**A. CLASSIFICATION OF SUBJECT MATTER**

IPC6 : C09C 3/04, C09C 1/62, C08K 3/08, C08J 3/22

According to International Patent Classification (IPC) or to both national classification and IPC

**B. FIELDS SEARCHED**

Minimum documentation searched (classification system followed by classification symbols)

IPC6 : C09C, C08K, C08J

Documentation searched other than minimum documentation to the extent that such documents are included in the fields searched

Electronic data base consulted during the international search (name of data base and, where practicable, search terms used)

EPODOC, PAJ, WPIL, CIBEPAT, RAPRA, CAS,

**C. DOCUMENTS CONSIDERED TO BE RELEVANT**

| Category* | Citation of document, with indication, where appropriate, of the relevant passages | Relevant to claim No. |
|---|---|---|
| A | EP 360513 A (TOYOTA JIDOSHA) 28.03.90 claims 1,9 | 1 |
| A | Data Base WPIL in Questel, week 8319, London: Derwent Publications Ltd., AN 83-46233K Y SU 939503 A (YAROSL LAKOKRASKA) 30.06.82, abstract | 1 |
| A | Data Base WPIL in Questel, week 8209, London: Derwent Publications Ltd., AN 82-17581E Y SU 82964 A (NOSACH V.F.) 15.05.81, abstract | 1 |
| A | US 4478643 (TOSIHIDE KUWAHARA ET AL.) 23.10.84 | |

☐ Further documents are listed in the continuation of Box C.    ☒ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 8 February 1996 (08.02.96) | 13 February 1996 (13.02.96) |

| Name and mailing address of the ISA/ | Authorized officer |
|---|---|
| S.P.T.O. | |
| Facsimile No. | Telephone No. |

Form PCT/ISA/210 (second sheet) (July 1992)

8